# EUROPÄISCHE PATENTANMELDUNG

(11) **EP 1 886 754 A1**
(43) Veröffentlichungstag der Anmeldung: **13.02.2008**
(21) Anmeldenummer: 07110244.6
(22) Anmeldetag: 14.06.2007
(51) Int. Cl.: B23H 3/02

(54) **Verfahren und Vorrichtung zur elektrochemischen Bearbeitung**

(30) Priorität: 11.08.2006 DE 102006037589
(71) Anmelder: ROBERT BOSCH GMBH, 70442 Stuttgart (DE)
(72) Erfinder: Hackenberg, Juergen, 74343, Sachsenheim (DE); Reitzle, Alexander, 89231, Neu-Ulm (DE)

(57) **Zusammenfassung**

Die Erfindung betrifft ein Verfahren zur elektrochemischen Bearbeitung eines metallischen Werkstückes durch Abtragen von metallischem Material mittels Stromfluss zwischen einer als Kathode (9) geschalteten Elektrode und dem als Anode (5) geschalteten metallischen Werkstück in Gegenwart eines Elektrolyten (23). Ein zur Bearbeitung erforderliches Potential wird mittels einer Referenzelektrode (13), die ein unveränderliches Potential aufweist, bestimmt und eingestellt. Die Erfindung betrifft weiterhin eine Vorrichtung zur elektrochemischen Bearbeitung eines metallischen Werkstückes, umfassend eine Strom-/Spannungsquelle zur Bereitstellung des Stromflusses, die mit einer als Kathode (9) geschalteten Elektrode und dem als Anode (5) geschalteten Werkstück verbunden ist, ein Reservoir zur Bereitstellung des Elektrolyten (23) zwischen der Elektrode und dem Werkstück und mindestens eine Vorrichtung zur Bereitstellung einer zeitabhängigen Relativbewegung zwischen der Elektrode und dem Werkstück. Zur Regelung eines für die elektrochemische Bearbeitung erforderlichen Potentials ist eine Referenzelektrode (13) vorgesehen.

## Beschreibung

### Stand der Technik

Die Erfindung betrifft ein Verfahren zur elektrochemischen Bearbeitung eines metallischen Werkstückes gemäß dem Oberbegriff des Anspruchs 1 sowie eine Vorrichtung zur elektrochemischen Bearbeitung eines metallischen Werkstückes gemäß dem Oberbegriff des Anspruchs 5.

Mit Hilfe der elektrochemischen Metallbearbeitung (ECM) lässt sich in eine Oberfläche eines metallischen Werkstückes eine Vertiefung mit einer vorgegebenen Form erzeugen. Hierzu wird eine Elektrode, deren Oberfläche ein Negativabbild der Form der zu erzeugenden Vertiefung ist, mit einer Vorschubgeschwindigkeit in das Werkstück, dessen Oberfläche bearbeitet werden soll, abgesenkt. Im Allgemeinen ist die Vorschubgeschwindigkeit dabei konstant. Das Werkzeug und das Werkstück werden von einem Elektrolyten umspült. Als Elektrolyt wird im Allgemeinen eine elektrisch leitende Salzlösung eingesetzt. Durch Anlegen eines Gleichstroms/einer Gleichspannung bzw. von Strom-/Spannungspulsen an die Elektrode wird aus dem Werkstück elektrochemisch Material abgetragen. Ein derartiges Verfahren ist zum Beispiel aus DE-A 103 60 080 bekannt.

Damit die Reaktion, durch die Material aus dem metallischen Werkstück gelöst wird, abläuft, ist es erforderlich, dass bei einem elektrochemischen Metallbearbeitungsverfahren mit zwei Polen, einer Anode und einer Kathode, eine relative Grenzspannung, die zur Metallauflösung erforderlich ist, zwischen den beiden Elektroden überschritten wird. Dadurch werden auch unerwünschte Reaktionen, z.B. Gasentwicklung, ermöglicht. Diese können sowohl an der Anode als auch an der Kathode erfolgen. Bei dem aus dem Stand der Technik bekannten Verfahren führt dies zu einer geringeren Effizienz, da der Strom neben der Metallauflösung auch für unerwünschte Nebenreaktionen, zum Beispiel einer Sauerstoffentwicklung, verbraucht wird.

Es ist bekannt, zur Bestimmung und Einstellung eines Potentials, d.h. der absoluten Spannung, an elektrochemischen Halbzellen eine Referenzelektrode, die über ein bekanntes und unveränderliches Potential verfügt, einzusetzen. Die Einstellung eines Potentials ist nach derzeitigem Stand der Technik nicht möglich. An der Referenzelektrode selbst laufen keine Reaktionen ab. Die Referenzelektrode ist hochohmig mit einer Regelapparatur, dem so genannten Potentiostaten verbunden. Um eine genaue Potentialbestimmung an Kathode oder Anode durchzuführen, wird gemäß dem Stand der Technik eine gut leitfähige Verbindung zum Beispiel in Form von Brücken mit Salzlösungen, so genannten Haber-Luggin-Kapillaren, oder Edelmetalldrähten nahe an die Elektrodenoberfläche gebracht, um Messverfälschungen zum Beispiel durch ohmsche Widerstände zu minimieren.

Bei der elektrochemischen Metallbearbeitung ist jedoch das Einbringen einer Referenzelektrode in den Zwischenraum zwischen Anode und Kathode aufgrund des geringen Abstandes nicht möglich. Zudem führt eine Referenzelektrode zu einer Störung im Potentialfeld zwischen der Anode und der Kathode und damit zu einer unerwünschten Änderung der Stromdichteverteilung auf der zu bearbeitenden Fläche. Hieraus resultiert ein Präzisionsverlust der Bearbeitung.

### Offenbarung der Erfindung

Bei der elektrochemischen Metallbearbeitung wird im Allgemeinen mit hochkonzentrierten Salzlösungen gearbeitet, um die erforderlichen Stromdichten an der Anode zu erzielen. Die Leitfähigkeiten betragen im Allgemeinen 50 bis 200 mS/cm. Damit liegen die Leitfähigkeiten im Bereich der aus dem Stand der Technik bekannten Brücken mit Salzlösungen. Hierdurch ist es möglich, bei der elektrochemischen Metallbearbeitung Potentiale auch mit einer in größerer Entfernung zur Anode oder Kathode angeordneten Referenzelektrode ohne zusätzliche Verbindungen mit hinreichender Genauigkeit zu bestimmen.

Bei dem erfindungsgemäßen Verfahren wird somit zur elektrochemischen Bearbeitung eines metallischen Werkstückes durch Abtragen von metallischem Material mittels Stromfluss zwischen einer als Kathode geschalteten Elektrode und dem als Anode geschalteten metallischen Werkstück in Gegenwart eines Elektrolyten ein zur Bearbeitung erforderliches Potential mittels einer Referenzelektrode, die ein unveränderliches Potential aufweist, bestimmt und eingestellt.

In einer bevorzugten Verfahrensvariante wird die Position der Referenzelektrode durch eine Potentialfeldberechnung, mit der das an unterschiedlichen Positionen im Elektrolyt zu messende Potential bestimmt wird, ermittelt. Die Potentialfeldberechnung kann dabei auf jede beliebige, dem Fachmann bekannte Weise erfolgen.

Vorzugsweise wird in Abhängigkeit von der Position der Referenzelektrode das Potential der Anode, das Potential der Kathode oder ein Mischpotential ermittelt und zur Regelung der elektrochemischen Bearbeitung des metallischen Werkstückes verwendet. Ein Mischpotential im Sinne der vorliegenden Erfindung ist ein gewichteter Mittelwert aus zwei oder mehreren Einzelpotentialen. Das Mischpotential bewegt sich immer zwischen den Grenzen des höchsten und niedrigsten Einzelpotentials. Das ermittelte Potential ist weiterhin auch abhängig von der Form und der Fläche der Anode bzw. der Kathode und dem Abstand von Anode und Kathode zueinander.

Besonders bevorzugt wird die Referenzelektrode so positioniert, dass zur elektrochemischen Bearbeitung des metallischen Werkstückes das Potential der Anode mittels der Referenzelektrode eingestellt wird.

Eine erfindungsgemäße Vorrichtung zur elektrochemischen Bearbeitung eines metallischen Werkstückes umfasst eine Strom-/Spannungsquelle zur Bereitstellung des Stromflusses, die mit einer als Kathode geschalteten Elektrode und dem Werkstück verbunden ist, ein Reservoir zur Bereitstellung des Elektrolyten zwischen der Elektrode und dem Werkstück und mindestens eine Vorrichtung zur Bereitstellung einer zeitabhängigen Relativbewegung zwischen der Elektrode und dem Werkstück. Weiterhin ist erfindungsgemäß zur Regelung eines für die elektrochemische Bearbeitung erforderlichen Potentials eine Referenzelektrode vorgesehen.

In einer ersten Ausführungsform sind die Referenzelektrode, das metallische Werkstück und die Elektrode gemeinsam in einem mit dem Elektrolyten gefüllten Becken angeordnet.

In einer zweiten Ausführungsform ist die Referenzelektrode in einem Zulauf oder einem Ablauf für den Elektrolyten angeordnet. Diese Anordnung ist zum Beispiel für die elektrochemische Bearbeitung im Innenbereich von Werkstücken geeignet. Bei der Anordnung der Referenzelektrode im Zulauf oder im Ablauf für den Elektrolyten ist gegebenenfalls bei großem Abstand zum Potentialfeldbereich von Anode und Kathode eine Widerstandskorrektur zu berücksichtigen.

In einer dritten Ausführungsform der erfindungsgemäßen Vorrichtung ist die Referenzelektrode mit einer Außenfläche des metallischen Werkstückes elektrisch leitend verbunden. Auch diese Anordnung ist zum Beispiel für die elektrochemische Metallbearbeitung im Innenbereich von metallischen Werkstücken geeignet. Die Abweichung bei der Potentialbestimmung setzt sich für den Fall, dass die Referenzelektrode mit einer Außenfläche des metallischen Werkstücks elektrisch leitend verbunden ist, aus dem Widerstand des Elektrolyten, dem Widerstand des Werkstückes, einem Kontaktwiderstand und einem Leitungswiderstand zusammen. Der größte dieser Widerstände ist der Kontaktwiderstand. Bei geeignetem Zustand der Werkstückoberfläche, das heißt bei schmutz- und belagsfreier Werkstückoberfläche, ist der Kontaktwiderstand jedoch klein und somit auch die Summe aller Widerstände. In diesem Fall ist keine Korrektur notwendig.

Die elektrisch leitende Verbindung der Referenzelektrode mit der Außenfläche des metallischen Werkstückes erfolgt zum Beispiel über eine leitfähige Zuleitung. Eine geeignete leitfähige Zuleitung, mit der die Referenzelektrode mit dem metallischen Werkstück verbunden ist, ist vorzugsweise ein Federkontakt. Es ist jedoch auch jede andere elektrisch leitende Verbindung, die dem Fachmann bekannt ist, denkbar, um die Referenzelektrode mit der Außenfläche des metallischen Werkstückes zu verbinden. Weiterhin ist es auch möglich, dass die Referenzelektrode das metallische Werkstück direkt kontaktiert.

Damit sich die Referenzelektrode im Elektrolyten bei der Durchführung der elektrochemischen Metallbearbeitung nicht auflöst und damit keine Reaktion an der Referenzelektrode stattfindet, ist die Referenzelektrode vorzugsweise eine Elektrode zweiter Art. Bei Elektroden zweiter Art hängt das Potential nicht von der Konzentration der Elektrolytlösung ab, in welche sie getaucht wird. Geeignete Elektroden zweiter Art sind zum Beispiel Kalomel-Elektroden oder Silber-Silberchlorid-Elektroden.

Vorteil des erfindungsgemäßen Verfahrens und der erfindungsgemäßen Vorrichtung ist, dass durch die Einstellung des Potentials unerwünschte Reaktionen vermieden werden. So wird zum Beispiel bei der elektrochemischen Metallbearbeitung mit einem Nitrat-Elektrolyten die Sauerstoffentwicklung an der Werkstückoberfläche vermieden. Gleichzeitig wird durch die Vermeidung der Gasentwicklung auch eine homogenere Metallauflösung in der Bearbeitungszone erzielt, da keine lokalen Blockaden oder Abschirmungen durch Gasblasen auftreten. Dies führt zu einer besseren Bearbeitungsqualität. Auch ist hierdurch eine geringere Oberflächenrauheit erzielbar.

Ein weiterer Vorteil des erfindungsgemäßen Verfahrens und der erfindungsgemäßen Vorrichtung ist, dass die Stromausbeute erhöht wird, da keine Energie für Nebenreaktionen verbraucht wird. Hieraus resultiert auch eine schnellere Bearbeitungsgeschwindigkeit.

Ein weiterer Vorteil ist eine Erhöhung der Präzision der Bearbeitung, da die Prozessdauer über die Integration der elektrischen Ladung genau bestimmbar ist.

Bei der Bearbeitung chromhaltiger Stähle lässt sich durch das erfindungsgemäße Verfahren die Bildung von Cr⁶⁺ vermeiden. Die Bildung Cr⁶⁺ hat einen erhöhten Energieverbrauch zur Folge, zudem handelt es sich bei Cr⁶⁺ um einen Gefahrstoff. Das Standardpotential E⁰ in basischer Lösung beträgt für die Umwandlung von Cr zu Cr³⁺ E⁰ = -0,74 V und für die Umwandlung von Cr³⁺ zu Cr⁶⁺ E⁰ = -0,13 V. Das bedeutet, dass bei einem Potential der Anode zwischen -0,74 und -0,13 V keine Bildung von Cr⁶⁺ erfolgt.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: eine Potentialfeldberechnung für eine Anordnung mit Anode, Kathode und Referenzelektrode,
- Figur 2: eine Anordnung von Anode, Kathode und Referenzelektrode in einem gemeinsamen Elektrolytraum,
- Figur 3: eine Anordnung von Anode, Kathode und Referenzelektrode in einem gemeinsamen Elektrolytraum in einer zweiten Ausführungsform,
- Figur 4: eine Anordnung von Anode, Kathode und Referenzelektrode, bei der die Referenzelektrode leitend mit der Anode verbunden ist,
- Figur 5: eine Anordnung von Anode, Kathode und Referenzelektrode, bei der die Referenzelektrode in einem Elektrolytablauf angeordnet ist.

### Ausführungsformen der Erfindung

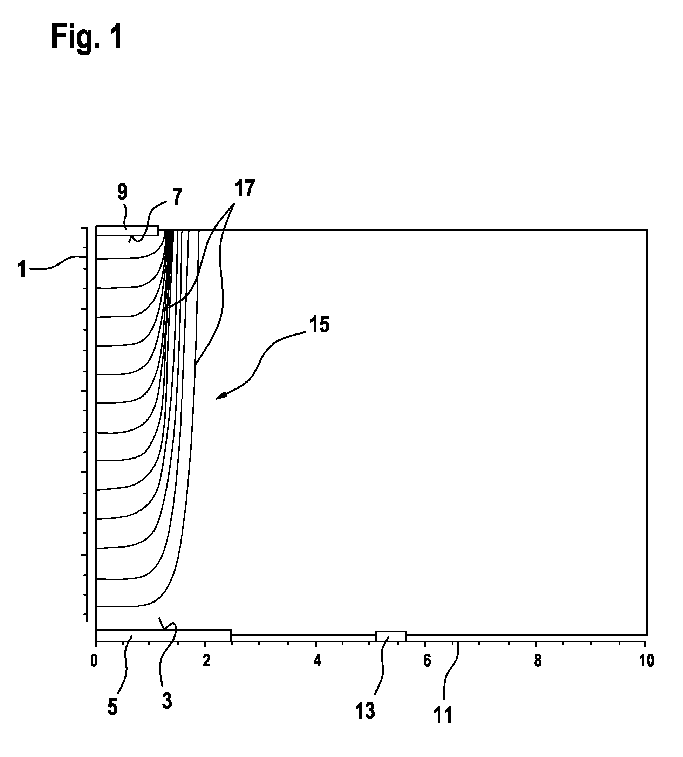

In Figur 1 ist eine Potentialfeldberechnung für eine Anordnung mit Anode, Kathode oder Referenzelektrode dargestellt.

Figur 1 zeigt einen zweidimensionalen Ausschnitt aus einem Elektrolytraum. Der Ausschnitt ist in Richtung der Y-Achse 1 durch eine Oberfläche 3 einer Anode 5 einerseits und durch eine Oberfläche 7 einer Kathode 9 andererseits begrenzt. Der Abstand zwischen der Oberfläche 3 der Anode 5 und der Oberfläche 7 der Kathode 9 beträgt in der in Figur 1 dargestellten Ausführungsform 0,5 mm. Die Ausdehnung des Raumes in Richtung der X-Achse 11 verläuft parallel zur Oberfläche 3 der Anode 5 und erstreckt sich über einen Bereich von 10 mm. Im Elektrolytraum befindet sich auf gleicher Höhe wie die Anode 5 eine Referenzelektrode 13.

Zwischen der Anode 5 und der Kathode 9 bildet sich ein Potentialfeld 15 aus. Das Potentialfeld ist hier durch Potential-Isolinien 17 dargestellt. Die Potential-Isolinien stellen dabei jeweils eine Linie dar, entlang deren Verlauf der Betrag der Potentialdifferenz zwischen Anode 5 und Kathode 9 konstant ist. Mit zunehmendem Abstand von der Kathode 9 zur Anode 5 hin nimmt der Betrag der Potentialdifferenz zu. Durch den Verlauf der Potential-Isolinie 17 ist zu erkennen, dass bei der in Figur 1 dargestellten Anordnung von Anode 5 und Referenzelektrode 13 das gemessene Potential an der Anode 5 und an der Referenzelektrode 13 nahezu gleich ist. Durch die in Figur 1 dargestellte Anordnung wird an der Referenzelektrode 13 das Potential der Anode 5 erfasst. Hierdurch lässt sich durch die Erfassung des Potentials an der Referenzelektrode das Potential an der Anode regeln. Eine Einstellung des Potentials an der Anode 5 derart, dass keine Nebenreaktionen ablaufen, ist möglich.

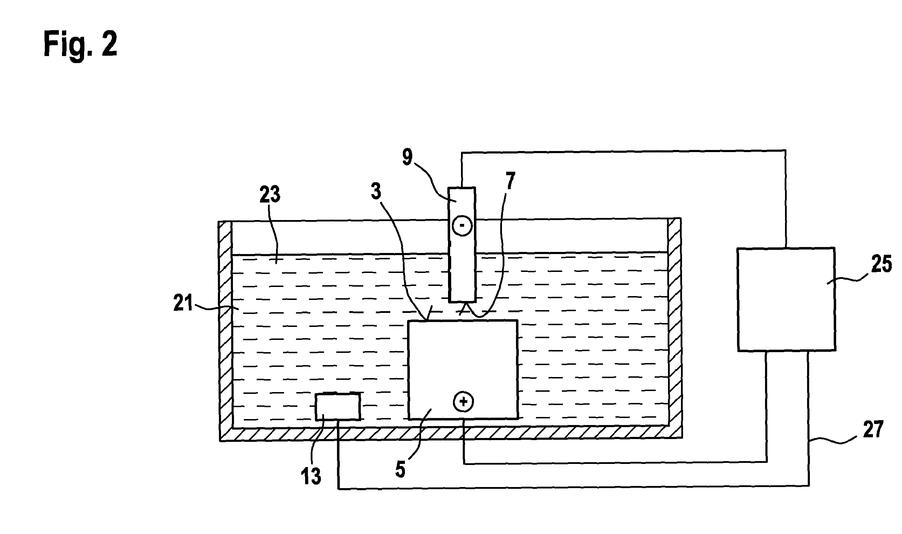

Figur 2 zeigt eine Anordnung von Anode, Kathode und Referenzelektrode in einem gemeinsamen Elektrolytraum.

Ein Elektrolytraum 21, hier vereinfacht als Bad dargestellt, ist mit einer Elektrolytlösung 23 befüllt. Als Elektrolytlösung eignen sich zum Beispiel hochkonzentrierte Salzlösungen. Eine geeignete Salzlösung ist zum Beispiel eine Alkali-Nitratlösung. Die Kationen der Alkali-Nitratlösung sind zum Beispiel Natrium- oder Kaliumionen. In der Elektrolytlösung 23 sind die Anode 5, die Kathode 9 und die Referenzelektrode 13 aufgenommen. Der Abstand der Oberfläche 7 der Kathode 9 und der Oberfläche 3 der Anode 5 wird dabei so gewählt, dass sich Metall aus der Anode 5 löst, sobald ein Strom/eine Spannung angelegt wird.

Sobald der Strom/die Spannung angelegt ist, bildet sich zwischen der Anode 5 und der Kathode 9 ein Potentialfeld aus, wie es in Figur 1 dargestellt ist. Die Position der Referenzelektrode 13 ist in der in Figur 2 dargestellten Ausführungsform so gewählt, dass der Betrag der Potentialdifferenz zwischen der Referenzelektrode 13 und der Kathode 9 und der Betrag der Potentialdifferenz zwischen der Anode 5 und der Kathode 9 ungefähr gleich groß ist. Somit wird durch die Referenzelektrode 13 das Potential der Anode 5 erfasst. Aufgrund der hohen Leitfähigkeit der Elektrolytlösung 23, die erforderlich ist zur elektrochemischen Bearbeitung eines metallischen Werkstücke, kann der Widerstand der Elektrolytlösung 23 für die Ermittlung des Potentials vernachlässigt werden.

Die Anode, die ein zu bearbeitendes metallisches Werkstück ist, die Kathode 9 und die Referenzelektrode 13 sind mit einem Potentiostaten 25 verbunden. Die Verbindung der Regelelektrode 13 mit dem Potentiostaten 25 erfolgt dabei über eine hochohmige Verbindungsleitung 27.

Bei dem Potentiostaten 25 handelt es sich um eine Regelapparatur, mit der die zur elektrochemischen Metallbearbeitung erforderliche Potentialdifferenz zwischen Anode 5 und Kathode 9 eingestellt werden kann.

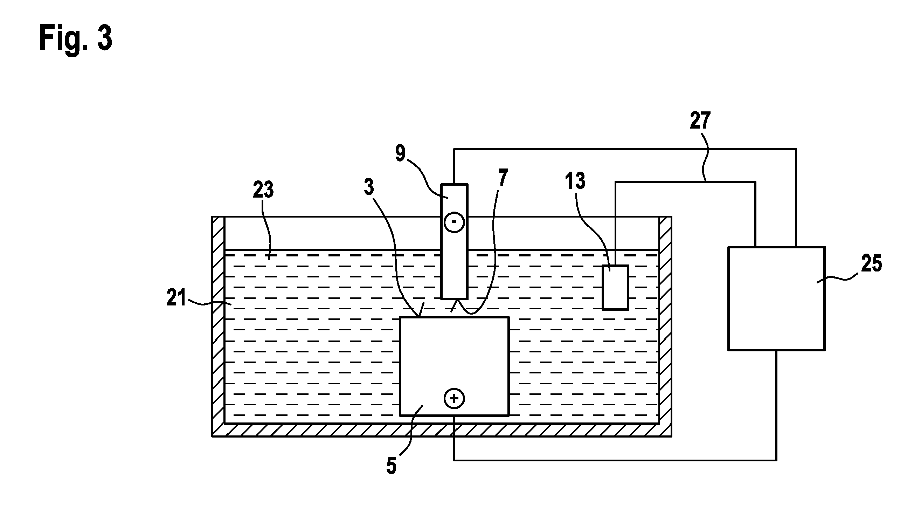

Figur 3 zeigt eine Anordnung von Anode, Kathode und Referenzelektrode in einem gemeinsamen Elektrolytraum in einer zweiten Ausführungsform.

Die in Figur 3 dargestellte Ausführungsform unterscheidet sich von der in Figur 2 dargestellten Ausführungsform durch die Positionierung der Referenzelektrode 13. In der in Figur 3 dargestellten Ausführungsform ist die Referenzelektrode 13 so positioniert, dass der Abstand von Referenzelektrode 13 zu Anode 5 und von Referenzelektrode 13 zu Kathode 9 jeweils etwa gleich groß ist.

Durch die Positionierung der Referenzelektrode 13, wie Sie in Figur 3 dargestellt ist, wird ein Mischpotential erfasst. Das heißt, dass der Wert des von der Referenzelektrode erfassten Potentials auch das Potential der Kathode 9 mit berücksichtigt wird. Der Betrag der Potentialdifferenz, die an der Referenzelektrode 13 erfasst wird, ist somit kleiner als der Betrag der Potentialdifferenz zwischen Kathode 9 und Anode 5. Über eine Potentialfeldberechnung, in der das von der Referenzelektrode 13 ermittelte Potential berücksichtigt wird, lässt sich das Potential an Anode 5 und Kathode 9 bestimmen.

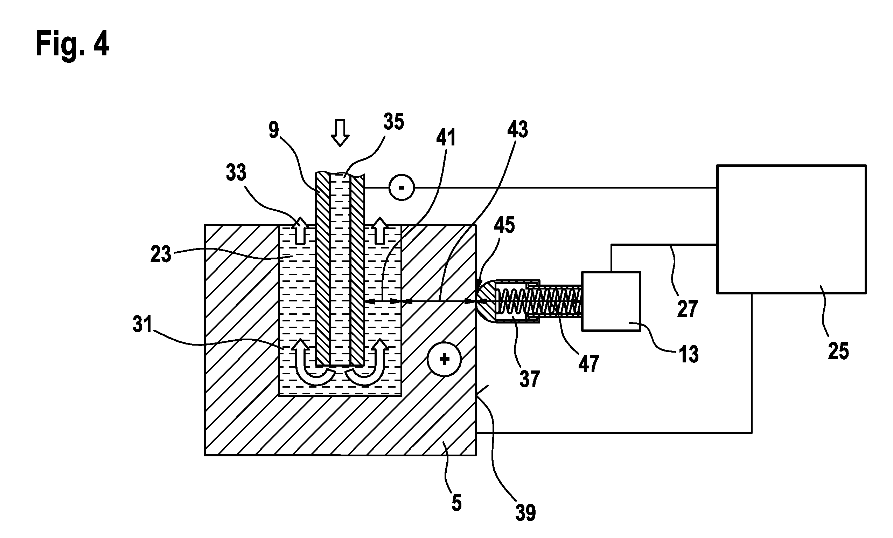

In Figur 4 ist eine Anordnung von Anode, Kathode und Referenzelektrode dargestellt, bei der die Referenzelektrode leitend mit der Anode verbunden ist.

Die in Figur 4 dargestellte Anordnung dient zur Innenbearbeitung eines metallischen Werkstückes, welches die Anode 5 bildet. In der Anode 5 ist eine Vertiefung 31 ausgebildet, in welche die Kathode 9 ragt. Die Vertiefung 31 wird von der Elektrolytlösung 23 durchspült. Die Strömung der Elektrolytlösung ist durch Pfeile 33 dargestellt. Die Elektrolytlösung 23 wird über einen Kanal 35, der in der Kathode 9 ausgebildet ist, zugeführt. Auf der der Anode 5 zugewandten Seite tritt die Elektrolytlösung 23 aus dem Kanal 35 in der Kathode 9 aus. Durch die ständig nachgeführte neue Elektrolytlösung 23 strömt die Elektrolytlösung 23 wieder aus der Vertiefung 31 in der Anode 5 heraus. Vorteil der Strömung der Elektrolytlösung 23 ist, dass bei der elektrochemischen Bearbeitung von der Anode gelöstes Material aus der Vertiefung 31 herausgespült wird.

Zur Bestimmung des Potentials der Anode 5 ist in der in Figur 4 dargestellten Ausführungsform die Referenzelektrode 13 über eine leitfähige Zuleitung 37 mit einer Außenfläche 39 der Anode 5 elektrisch leitend verbunden. Die leitfähige Zuleitung 37 ist zum Beispiel ein Federkontakt.

Bei der Bestimmung des Potentials ergibt sich eine Abweichung zwischen dem Potential der Anode 5 und der Referenzelektrode 13, die sich aus einem Widerstand des Elektrolyten 41, einem Widerstand 43 der Anode 5, einem Kontaktwiderstand 45 und einem Widerstand 47 der leitfähigen Zuleitung 37 zusammensetzt. Da die Elektrolytlösung 23, die Anode 5 und die leitfähige Zuleitung 37 jeweils elektrisch gut leitend sind, ist deren Widerstand klein. Jedoch kann der Kontaktwiderstand 45 einen deutlich größeren Wert annehmen als der Widerstand 41 des Elektrolyten, der Widerstand 43 der Anode 5 und der Widerstand 47 der leitfähigen Zuleitung 37. Wenn jedoch die Außenfläche 39 der Anode 5 frei von Verunreinigungen und/oder Belägen ist, ist auch der Kontaktwiderstand 45 klein. Somit ist auch die Summe aller Widerstände 41, 43, 45, 47 klein, so dass zur Bestimmung des Potentials der Anode 5 über die Referenzelektrode 13 keine Korrektur notwendig ist.

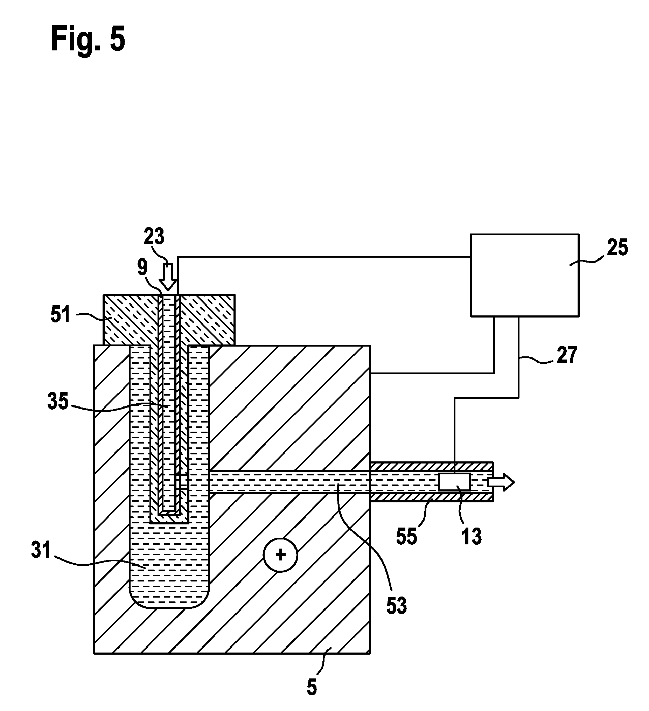

In Figur 5 ist eine Anordnung von Anode, Kathode und Referenzelektrode dargestellt, bei der die Referenzelektrode in einem Elektrolytablauf angeordnet ist. Die in Figur 5 dargestellte Ausführungsform eignet sich ebenfalls zur Innenbearbeitung eines metallischen Werkstückes, welches als Anode 5 geschaltet ist. Im Unterschied zu der in Figur 4 dargestellten Ausführungsform ist bei der in Figur 5 dargestellten Ausführungsform die Kathode 9 von einer Isolierung 51 umschlossen. Die Isolierung 51 deckt gleichzeitig auch die in der Anode 5 ausgebildete Vertiefung 31 ab. In der hier dargestellten Ausführungsform wird die Elektrolytlösung 23 über den Kanal 35 in der Kathode 5 in die Vertiefung 31 geleitet. Damit die Elektrolytlösung aus der Vertiefung 31 ablaufen kann, ist in der Anode 5 ein Kanal 53 ausgebildet, über den die Elektrolytlösung 23 ablaufen kann. An den Kanal 53 schließt sich ein Elektrolytablauf 55 an. Die Referenzelektrode 13 zur Bestimmung des Potentials der Anode 5 ist im Elektrolytablauf 55 angeordnet. In der hier dargestellten Ausführungsform, bei der die Referenzelektrode in einem Elektrolytablauf 55 angeordnet ist, wird durch die Referenzelektrode 13 das Mischpotential gemessen. An der in Figur 5 dargestellten Position der Referenzelektrode 13 wird fast ausschließlich das Anodenpotential gemessen. Wird die Referenzelektrode 13 aber entlang des Kanals 53 zur Vertiefung 31 hin bewegt, wird vermehrt das Mischpotential von Anode 5 und Kathode 9 gemessen. Wenn der Elektrolytablauf 55 elektrisch isoliert ist, wird jedoch auch an der in Figur 5 dargestellten Position ein Mischpotential gemessen.

Bei einem großen Abstand der Referenzelektrode 13 zum Potentialfeld zwischen Anode 5 und Kathode 9 muss bei der in Figur 5 dargestellten Ausführungsform gegebenenfalls eine Widerstandskorrektur berücksichtigt werden. Diese ergibt sich aus dem Abstand der Referenzelektrode 13 vom Potentialfeld und der Leitfähigkeit der Elektrolytlösung.

## Patentansprüche

1. Verfahren zur elektrochemischen Bearbeitung eines metallischen Werkstückes durch Abtragen von metallischem Material mittels Stromfluss zwischen einer als Kathode (9) geschalteten Elektrode und dem als Anode (5) geschalteten metallischen Werkstück in Gegenwart eines Elektrolyten (23), **dadurch gekennzeichnet, dass** ein zur Bearbeitung erforderliches Potential mittels einer Referenzelektrode (13), die ein unveränderliches Potential aufweist, bestimmt und eingestellt wird.

2. Verfahren nach Anspruch 1, **dadurch gekennzeichnet, dass** die Position der Referenzelektrode (13) durch eine Potentialfeldberechnung, mit der das an unterschiedlichen Positionen im Elektrolyt (23) zu messende Potential bestimmt wird, ermittelt wird.

3. Verfahren nach Anspruch 1 oder 2, **dadurch gekennzeichnet, dass** in Abhängigkeit der Position der Referenzelektrode (13) das Potential der Anode (5), das Potential der Kathode (9) oder ein Mischpotential ermittelt und zur Regelung der elektrochemischen Bearbeitung des metallischen Werkstückes verwendet wird.

4. Verfahren nach einem der Ansprüche 1 bis 3, **dadurch gekennzeichnet, dass** zur elektrochemischen Bearbeitung des metallischen Werkstückes das Potential der Anode (5) mittels der Referenzelektrode (13) eingestellt wird.

5. Vorrichtung zur elektrochemischen Bearbeitung eines metallischen Werkstückes, umfassend eine Strom-/Spannungsquelle zur Bereitstellung des Stromflusses, die mit einer als Kathode (9) geschalteten Elektrode und dem als Anode (5) geschalteten Werkstück verbunden ist, ein Reservoir zur Bereitstellung des Elektrolyten (23) zwischen der Elektrode und dem Werkstück und mindestens eine Vorrichtung zur Bereitstellung einer zeitabhängigen Relativbewegung zwischen der Elektrode und dem Werkstück, **dadurch gekennzeichnet, dass** zur Regelung eines für die elektrochemische Bearbeitung erforderlichen Potentials eine Referenzelektrode (13) vorgesehen ist.

6. Vorrichtung nach Anspruch 5, **dadurch gekennzeichnet, dass** die Referenzelektrode (13), das metallische Werkstück und die Elektrode gemeinsam in einem mit dem Elektrolyt gefüllten Elektrolytraum (21) angeordnet sind.

7. Vorrichtung nach Anspruch 5, **dadurch gekennzeichnet, dass** die Referenzelektrode (13) in einem Zulauf oder einem Ablauf (55) für den Elektrolyten angeordnet ist.

8. Vorrichtung nach Anspruch 5, **dadurch gekennzeichnet, dass** die Referenzelektrode (13) mit einer Außenfläche (39) des metallischen Werkstückes elektrisch leitend verbunden ist.

9. Vorrichtung nach Anspruch 8, **dadurch gekennzeichnet, dass** die elektrisch leitende Verbindung der Referenzelektrode (13) mit der Außenfläche (39) des metallischen Werkstückes über eine leitfähige Zuleitung (37) erfolgt.

10. Vorrichtung nach Anspruch 9, **dadurch gekennzeichnet, dass** die leitfähige Zuleitung (37), mit der die Referenzelektrode (13) mit dem metallischen Werkstück verbunden ist, ein Federkontakt ist.

11. Vorrichtung nach einem der Ansprüche 5 bis 10, **dadurch gekennzeichnet, dass** die Referenzelektrode (13) eine Elektrode zweiter Art ist.

12. Vorrichtung nach einem der Ansprüche 5 bis 11, **dadurch gekennzeichnet, dass** die Referenzelektrode (13) eine Kalomel-Elektrode oder eine Silber-Silberchlorid-Elektrode ist.
